**Europäisches Patentamt**

**European Patent Office**

**Office européen des brevets**

(11) Publication number : **0 422 755 B1**

# EUROPEAN PATENT SPECIFICATION

(45) Date of publication of patent specification :
29.06.94 Bulletin 94/26

(51) Int. Cl.$^5$ : **C01G 49/06, C09D 5/24**

(21) Application number : 90303501.2

(22) Date of filing : 02.04.90

(54) **Plate-like maghemite particles and process of producing the same.**

(30) Priority : **11.10.89 JP 265512/89**

(43) Date of publication of application :
17.04.91 Bulletin 91/16

(45) Publication of the grant of the patent :
29.06.94 Bulletin 94/26

(84) Designated Contracting States :
**DE FR GB NL**

(56) References cited :
EP-A- 0 180 881
EP-A- 0 279 626
GB-A- 2 051 027
CHEMICAL ABSTRACTS, vol. 100, no. 26, June
1984, page 90, abstract no. 211715h, Colum-
bus, Ohio, US; Y.M. HAM et al.: "Studies on
micaceous iron oxide for pigment. Part. II.
Synthesis of micaceous iron oxide", & YONGU
POGO - KUNGNIP KONGOP SIHOMWON 1982,
32, 11-19

(56) References cited :
CHEMICAL ABSTRACTS, vol. 92, no. 6, Feb-
ruary 1980, page 119, abstract no. 44001e,
Columbus, Ohio, US; & JP-A-79 101 796 (SUMI-
TOMO METAL MINING) 10-08-1979

(73) Proprietor : **TODA KOGYO CORP.**
7-1 Yokogawa-Shinmachi
Nishi-ku
Hiroshima-shi Hiroshima-ken (JP)

(72) Inventor : **Sadamura, Hideaki**
4-4-25-306 Minaga,
Saeki-ku
Hiroshima-shi, Hiroshima-ken (JP)
Inventor : **Takedoi, Atsushi**
6-4-62 Itsukaichi,
Saeki-ku
Hiroshima-shi, Hiroshima-ken (JP)

(74) Representative : **Woods, Geoffrey Corlett et al**
J.A. KEMP & CO.
14 South Square
Gray's Inn
London WC1R 5LX (GB)

## Description

The present invention relates to plate-like maghemite particles useful as materials for manufacturing electromagnetic wave absorbers and shields, their preparation and a paint containing the particles.

The use of maghemite particles as the manufacturing materials for electromagnetic wave absorbers and shields is known. For example, JP-A-54-110496 (1979) discloses: "the electromagnetic wave absorption properties of magnetite ($Fe_3O_4$) were examined in comparison to those of conventional composite ferrites and in the microwave region of 5-10 GHz, the material can be made thinner, and has better workability and superior electromagnetic wave absorption to composite ferrites.---".

Electromagnetic wave absorption and shielding are carried out by applying a paint, obtained by preparing a dispersion of maghemite particles in a vehicle, to buildings, ships and aircraft which reflect such waves, or to instruments which generate such waves.

It is required that the maghemite particles used as materials for electromagnetic wave absorption and shield materials are plate-like particles, have excellent dispersibility in the vehicle, and have a large particle size, specifically a particle size of not less than 0.5μm.

Concerning the shape of the particles, it is disclosed, for example in JP-A-61-77616 (1986) that: "plate-like ferrite particles have excellent properties as electromagnetic wave absorption and shielding materials in the low frequency region, and these properties are not achieved by ordinary ferrite particles"; in JP-A- 55-104926 (1980) that: "--- a very remarkable parallel orientation of individual particles is produced in the covering material. Accordingly, a very high packing density can thus be achieved, and as a result, for example, anti-corrosion is enhanced, screening of electromagnetic interference becomes more effective, and electrical conductivity is increased"; and "there are other uses for hexagonal thin-plate (plate-like) iron oxide particles having a magnetite or maghemite structure. ---a very remarkable parallel orientation of individual particles is produced. A very high packing density can be achieved.---". It is, therefore, evident that plate-like particles are necessary.

With regard to the particle size, it is disclosed in JP-A- 61-77626 (1986) that: "--- the average major diameter of the particles is not less than 0.5 μm ---".

Conventional processes for producing plate-like maghemite particles are, for example:

(i) a process comprising the steps of autoclaving an alkaline suspension containing ferric hydroxide or goethite to form plate-like hematite particles in aqueous solution, reducing the thus obtained plate-like hematite particles by heating in a reducing gas, and then oxidizing the obtained particle with heating; and

(ii) a process comprising the steps of rapidly oxidizing an alkaline suspension containing ferrous hydroxide with a strong oxidizing agent, or reacting a ferric salt with an alkali in an aqueous medium in the presence of specific additives to produce ferric hydroxide, autoclaving the thus obtained ferric hydroxide, thereby obtaining plate-like goethite particles in aqueous solution, dehydrating the said plate-like goethite particles by heating, reducing the obtained particle by heating in a reducing gas, and then oxidizing the obtained particles with heating.

Process (i) is disclosed in JP-A- 51-28700 (1976) and JP-A- 55-104923 (1975). Process (ii) is disclosed in JP-A- 61-266311 (1986) and JP-A- 55-104923 (1980).

Plate-like maghemite particles having excellent dispersibility and large size, in particular having a particle size of more than 0.5 μm, are strongly demanded at the present. However, in the case of the known processes mentioned above, it is necessary to reduce the plate-like particles formed in aqueous solution by heating in a reducing gas. In this reducing process, rapid particle growth takes place, whereby sintering of the particles and between the particles arises. As a result, it becomes difficult to disperse the particles in the vehicle or the resin, and accordingly the packing density lowers and particle orientation is impaired.

It is well-known that when plate-like magnetite particles are oxidized with heating to form plate-like maghemite particles, particle growth does not take place, and therefore sintering of the particles and between the particles does not occur.

In process (ii), water in the goethite crystals is removed when the plate-like goethite particles are heated, and many pores are therefore produced on the surfaces and inside the plate-like magnetite particles obtained. When the plate-like maghemite particles are obtained by oxidizing the plate-like magnetite particles with heating, many pores remain on the surfaces and inside the particles. If such porous plate-like maghemite particles are dispersed in a vehicle or a resin, other fine particles are attracted to the portions where there are superficial magnetic poles. As a result, many particles agglomerate together, and agglomerated lumps of a fairly large size are formed. Dispersion of the particles in a vehicle is then rendered difficult, and the particle orientation is impaired.

As is clear from the above discussion, in order to obtain poreless, non-sintered maghemite particles, plate-like magnetite particles should be formed directly in aqueous solution.

2

In order to overcome the above disadvantages, the present inventors have already proposed a process of forming directly poreless, non-sintered plate-like magnetite particles in aqueous solution (EP-A-0279626). Using this process, however, plate-like magnetite particles of a large particle size, specifically of a particle size of more than 0.5μm, could not be obtained.

The coercive force and residual magnetization of maghemite particles is correlated with particle size. As the size increases, the coercive force and residual magnetization decrease, so particles of a large size are preferable for electromagnetic wave absorbers and shielding materials.

A process is therefore required for forming plate-like maghemite particles having a particle size of more than 0.5 μm in aqueous solution.

The present invention provides poreless, non-sintered plate-like maghemite particles having:

(i) an average particle diameter of more than 0.5μm and not more than 2.0μm;

(ii) a BET specific surface area of not more than 6.0m²/g;

(iii) a coercive force of not more than 6.37 kA/m (80 Oe);

(iv) an aspect ratio (ratio of plate surface diameter:thickness) of from 3:1 to 35:1; and

(v) a squareness ratio (ratio of $\sigma_r:\sigma_s$ of from 0.070:1 to 0.125:1.

The present invention also provides a process for producing poreless, non-sintered plate-like maghemite particles as defined above, comprising

(i) autoclaving an alkaline suspension containing ferric oxide hydroxide particles and ferrous hydroxide in the presence of sulfate ion at a temperature of from 200 to 300°C to form plate-like magnetite particles, the ferric oxide hydroxide particles being present in an amount of from 0.05 to 1.0 mol/l, the molar ratio of the ferric oxide hydroxide particles to ferrous hydroxide being from 2:1 to 1:1.5, the concentration of sulfate ion in the suspension being from 0.025 to 1.0 mol/l and the concentration of free OH ion in the alkaline suspension being from 0.1 to 10 mol/l, and

(ii) oxidizing the obtained plate-like magnetite particles under heating in air.

The present invention further provides a paint comprising a vehicle and particles as defined above.

In the accompanying drawings:

Fig.1 and Figs. 3 to 5 are electron micrographs of the plate-like magnetite particles obtained in Synthesis Examples 1 to 4 respectively.

Fig. 2 is the X-ray diffraction pattern of the plate-like magnetite particles obtained in Synthesis Example 1.

Fig. 6 is an electron micrograph of the isotropic magnetite particles obtained in Comparative Example 1.

Fig. 7 is an electron micrograph of the plate-like maghemite particles obtained in Example 1.

The maghemite particles of the present invention are large particles having an average particle diameter of more than 0.5 μm and not more than 2.0 μm, preferably from 0.7 to 2.0 μm. As the particles are formed directly in aqueous solution, they are poreless, and as the particles do not undergo a reduction with heating, they are also non-sintered.

As the plate-like maghemite particles of the present invention are large and poreless, their BET specific surface area is not more than 6.0 m²/g, preferably from 1.5 to 6.0 m²/g, more preferably from 2.5 to 5.5 m²/g. These plate-like particles are poreless and non-sintered. They can easily be made into paints. Their dispersibility and orientation are excellent, and a high packing density in the vehicle or resin can be achieved.

The coercive force (Hc) of the plate-like maghemite particles of the present invention is not more than 80 Oe, preferably from 50 to 75 Oe. As a result, since a high magnetic permeability (μ) is easily obtained, the plate-like maghemite particles are very useful as powders for electromagnetic wave absorber and shield materials.

In the present invention, as the ferric oxide hydroxide particles α, β or γ-FeOOH may be used.

In the present invention, the ferrous hydroxide may be produced by reacting a ferrous salt with an alkali.

As the ferrous salt, ferrous sulfate or ferrous chloride may be used, and as the alkali, sodium hydroxide may be used.

The sulfate ion of the present invention may be produced by the reaction of a ferrous salt with an alkali, or it may be supplied by adding a sulfate such as sodium sulfate or metal sulfate such as manganese sulfate, zinc sulfate or nickel sulfate.

The concentration of ferric oxide hydroxide particles in the alkaline suspension is from 0.05 to 1.0mol/ℓ, preferably from 0.1 to 0.5 mol/ℓ and the mole ratio of the ferric oxide hydroxide particles to the ferrous hydroxide is from 2:1 to 2:1.5, preferably from 2:1 to 2:1.2

The concentration of sulfate ion in the alkaline suspension is from 0.025 to 1.0 mol/ℓ, preferably from 0.05 to 0.5 mol/ℓ. If the concentration of sulfate ion in the alkaline suspension is less than 0.025 mol/ℓ, it tends to become difficult to form plate-like magnetite particles.

The concentration of free OH ion in the alkaline suspension is from 0.1 to 10 mol/ℓ, preferably from 1.0

to 7 mol/$\ell$. With increasing concentration of free OH ion, the plate-like magnetite particles obtained tend to become thinner and the plate ratio increases. If the concentration of free OH ion is less than 0.1 mol/$\ell$, the reaction slows down and it tends to become difficult to form plate-like magnetite particles.

The autoclaving process used in the present invention may be carried out in a high temperature, high pressure vessel such as an autoclave.

The autoclaving temperature used in the present invention is from 200 to 300°C.

If the temperature is less than 200°C the particle size distribution of the plate-like magnetite particles widens. If the temperature exceeds 300°C, plate-like magnetic particles can still be formed, but from the viewpoint of safety of the equipment, the upper limit of temperature is 300°C.

The autoclaving time in the present invention may be the time required to form plate-like magnetite particles directly in aqueous solution, there being no special restriction on this time.

The oxidation of the plate-like magnetite particles in the present invention under heating in air may be carried out by a usual method. The temperature is preferably from 200 to 400°C.

The plate-like maghemite particles of the present invention have an average particle diameter of more than 0.5 $\mu$m and not more than 2.0 $\mu$m, preferably from 0.7 to 2.0 $\mu$m; a BET specific surface area of not more than 6.0 m$^2$/g, preferably from 1.5 to 6.0 m$^2$/g, more preferably from 2.5 to 5.5 m$^2$/g; a coercive force (Hc) of not more than 6.37 kA/m (80 Oe), preferably from 3.98 to 5.97 kA/m (50 to 75 Oe); an aspect ratio (ratio of plate surface diameter: thickness) of from 3:1 to 35:1, preferably from 5:1 to 30:1; and a squareness ratio (ratio of $\sigma_r : \sigma_s$) of from 0.070:1 to 0.125:1, preferably from 0.075:1 to 0.125:1. In addition, as the plate-like particles are poreless and non-sintered, they have excellent dispersibility in a vehicle or a resin, and since plate-like particles are large particles which especially exceed 0.5 $\mu$m in particle size, they are suitable for use as powders for electromagnetic wave absorber and shield materials.

Further, the plate-like maghemite particles of the present invention are of a brown to black colour, and as the plate-like particles have excellent dispersibility in a vehicle or resin, they may be used as colouring pigments. In addition to the above properties, as these plate-like particles are magnetic, they are also expected to be useful as magnetic colour toners. Furthermore, since the plate-like maghemite particles of the present invention have excellent mechanical properties such as rigidity and apparent density, they are expected to be useful as a vehicle damping material.

Examples

The present invention is now further described in the following Examples and Comparative Examples.

Average particle diameters and aspect ratios (ratio of plate surface diameter: thickness) given in the Examples and Comparative Examples are averages of values measured from electron micrographs, and the specific surface areas were measured by the BET method. Measurement of magnetization was carried out by a vibrating sample magnetometer VSMP-1 (Toei Kogyo Co.) under a field of 796 kA/m (10 KOe).

{Manufacture of Plate-Like Magnetite Particles}

Synthesis Examples 1 to 4
Comparative Example 1
Reference Example 1

Synthesis Example 1

0.093 mol of a-FeOOH, 0.046 mol of FeSO$_4$ and 0.7 mol of NaOH were mixed together, and the total volume made up to 0.7 $\ell$. After introducing the resultant mixture into an autoclave, it was heated to 220°C, and maintained at this temperature with mechanical stirring for 2 hours to form a black precipitate. After cooling to room temperature, the obtained black precipitate was filtered off, washed with water, dried and disagregated by the usual methods.

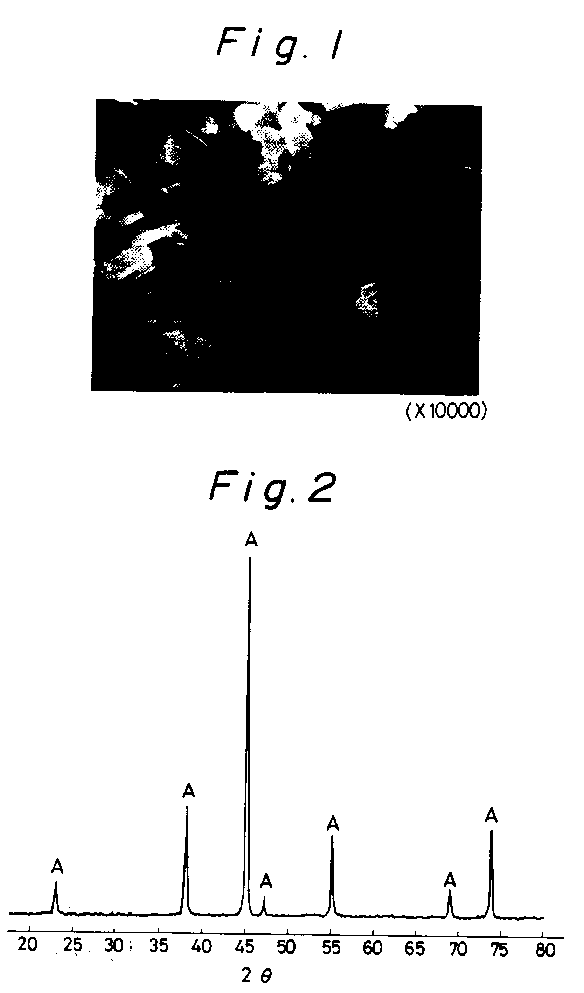

The obtained black particles were shown by transmission electron microscopy to have an average particle diameter of 1.0 $\mu$m. As is seen from the scanning electron micrograph in Fig. 1 (x 10,000), the plate-like particles had an aspect ratio (ratio of plate surface diameter: thickness) of 7:1, and there were no pores on the surface or inside the particles.

The obtained particles were individually distributed (non-sintered), their BET specific surface area was 2.8 m$^2$/g, their squareness ratio ($\sigma_r : \sigma_s$) was 0.078:1, and the particles had excellent orientation. The coercive force (Hc) of the particles was 4.62 kA/m (58 Oe). Fig. 2 shows the X-ray diffraction pattern of the particles. In Fig. 2, the peaks A corresponds to magnetite, and it was thus be concluded that the particles consisted of magnetite.

## Synthesis Example 2

0.093 mol of $\alpha$-FeOOH, 0.046 mol of $FeSO_4$ and 4.2 mol of NaOH were mixed together, and the total volume made up to 0.7 $\ell$. After introducing the resultant mixture into an autoclave, it was heated to 250°C, and maintained at this temperature with mechanical stirring for 2 hours to form a black precipitate. After cooling to room temperature, the obtained black precipitate was filtered off, washed with water, dried and disagregated by the usual methods.

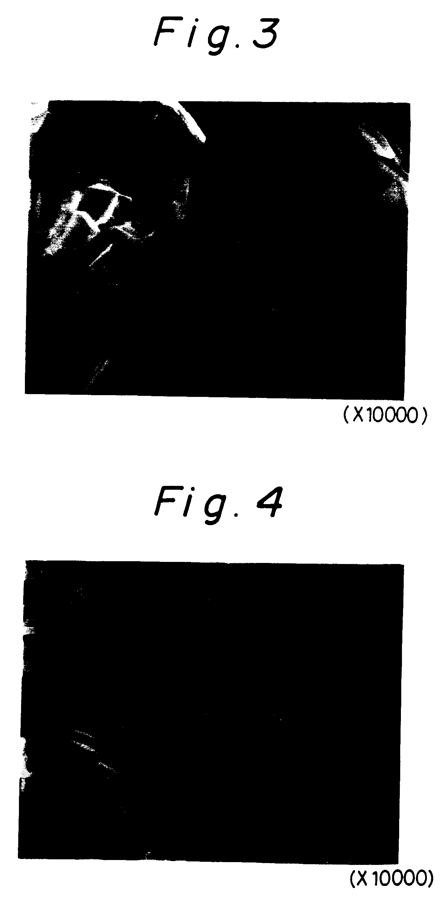

The obtained black particles were shown by transmission electron microscopy to have an average particle diameter of 1.5 $\mu$m. As is seen from the scanning electron micrograph in Fig. 3 (x 10,000), the plate-like particles had an aspect ratio (ratio of plate surface diameter: thickness) of 21:1, and there were no pores on the surface or inside the particles.

The obtained particles were individually distributed (non-sintered), their BET specific surface area was 5.5 $m^2$/g, their squareness ratio ($\sigma_r$:$\sigma_s$) was 0.087:1, and the particles had excellent orientation. The coercive force (Hc) of the particles was 5.09 kA/m (64 Oe).

The X-ray diffraction pattern of the particles showed only peaks corresponding to magnetite, and it was thus be concluded that the particles consisted of magnetite.

## Synthesis Example 3

0.093 mol of $\alpha$-FeOOH, 0.046 mol of $FeSO_4$ and 0.35 mol of NaOH were mixed together, and the total volume made up to 0.7 $\ell$. After introducing the resultant mixture into an autoclave, it was heated to 280°C, and maintained at this temperature with mechanical stirring for 2 hours to form a black precipitate. After cooling to room temperature, the obtained black precipitate was filtered off, washed with water, dried and disagregated by the usual methods.

The obtained black particles were shown by transmission electron microscopy to have an average particle diameter of 0.7 $\mu$m. As is seen from the scanning electron micrograph in Fig. 4 (x 10,000), the plate-like particles had an aspect ratio (ratio of plate surface diameter: thickness) of 6:1, and there were no pores on the surface or inside the particles.

The obtained particles were individually distributed (non-sintered), their BET specific surface area was 3.5 $m^2$/g, their squareness ratio ($\sigma_r$:$\sigma_s$) was 0.092:1, and the obtained particles had excellent orientation. The coercive force (Hc) of the particles was 4.54 kA/m (57 Oe).

The X-ray diffraction pattern of the particles showed only peaks corresponding to magnetite, and it was thus be concluded that the particles consisted of magnetite.

## Synthesis Example 4

0.093 mol of $\alpha$-FeOOH, 0.046 mol of $FeCl_2$ and 5.6 mol of NaOH were mixed together, 0.1 mol of $Na_2SO_4$ was added, and the total volume made up to 0.7$\ell$. After introducing the resultant mixture into an autoclave, it was heated to 220°C, and maintained at this temperature with mechanical stirring for 2 hours to form a black precipitate. After cooling to room temperature, the obtained black precipitate was filtered off, washed with water, dried and disagregated by the usual methods.

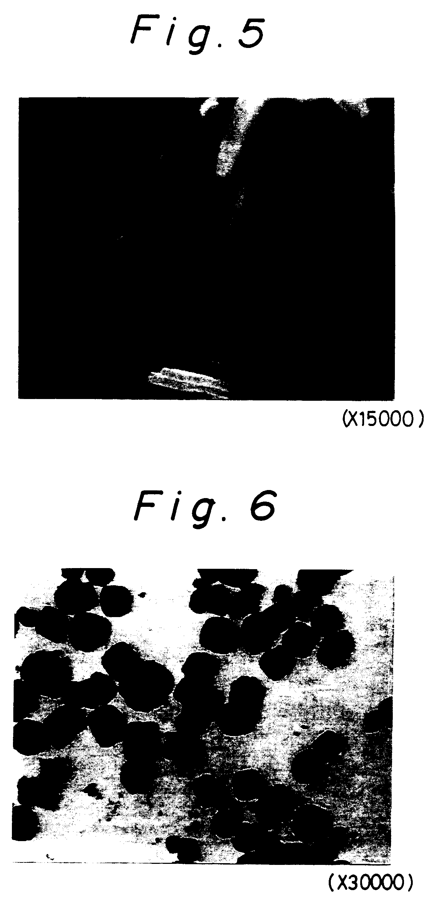

The obtained black particles were shown by transmission electron microscopy to have an average particle diameter of 2.0 $\mu$m. As is seen from the scanning electron micrograph in Fig. 5 (x 15,000), the plate-like particles had an aspect ratio (ratio of plate surface diameter: thickness) of 25:1, and there were no pores on the surface or inside the particles.

The obtained particles were individually distributed (non-sintered), their BET specific surface area was 4.8 $m^2$/g, their squareness ratio ($\sigma_r$:$\sigma_s$) was 0.082, and the obtained particles had excellent orientation. The coercive force (Hc) of the particles was 4.29 kA/m (53 Oe).

The X-ray diffraction pattern of the particles showed only peaks corresponding to magnetite, and it was thus be concluded that the particles consisted of magnetite.

## Comparative Example 1

A black precipitate was formed as in Example 1 except that $FeCl_2$ was used instead of $FeSO_4$. After cooling to room temperature, the obtained black precipitate was filtered off, washed with water, dried and disagregated by the usual methods.

The obtained black particles were shown by transmission electron microscopy to have an average particle diameter of 0.25 μm. As is seen from the scanning electron micrograph in Fig. 6, (x 30,000), the obtained particles exhibited an isotropic form.

Reference Example 1

0.83 ℓ of a 1.35 mol/l aqueous solution of ferrous sulfate was added to a reaction vessel kept under a flow of $N_2$ gas, in which had been placed 3.67ℓ of an aqueous solution of $Na_2CO_3$ of 0.62 mol/ℓ to which had been added 1.65 g of trisodium citrate dihydrate, such that the resulting solution contained 0.5 mol % based on Fe (correspoding to $CO_3$/Fe = 2.0 equivalents), and $FeCO_3$ was formed at a temperature of 60°C. The iron concentration was then 0.25 mol/ℓ (calculated as Fe). The resultant aqueous solution containing $FeCO_3$ was subjected to an aging treatment at 85°C for 30 min. while blowing in $N_2$ gas at a rate of 15 ℓ/min, and particles were then formed by blowing in air at 85°C for 2.0 hours at a rate of 18 ℓ/min.

When the oxidation reaction was completed, part of the reaction solution was removed, and was made acid with hydrochloric acid. The presence or absence of $Fe^{2+}$ was determined by the presence or absence of a blue coloration on adding a solution of red prussiate of potash.

The particles obtained were filtered off, washed with water, dried and disagregated by the usual methods. The particles obtained were shown by transmission electron microscopy to have an average particle diameter of 0.39 μm. From a scanning electron micrograph, the plate-like particles had an aspect ratio (ratio of plate surface diameter: thickness) of 8:1, and there were no pores on the surface or inside the particles.

The obtained particles had a BET specific surface area of 8.5 m²/g. Their coercive force Hc was 8.76 kA/m (110 Oe), saturation magnetization $\sigma_s$ was 87.8 emu/g, and squareness ratio ($\sigma_r$:$\sigma_s$) was 0.168:1.

The X-ray diffraction pattern of the obtained particles showed only peaks corresponding to magnetite, and it was thus be concluded that the particle consisted of magnetite.

{Manufacture of Plate-Like Maghemite Particles}

Examples 1-4:

Example 1

70 g of the plate-like magnetite particle obtained in Synthesis Example 1 was heated in air at 250°C for 30 min so as to obtain maghemite particles.

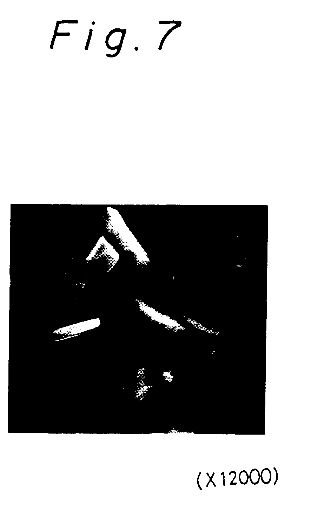

The maghemite particles obtained were shown by transmission electron microscopy to have an average particle diameter of 1.0 μm. As is seen from the scanning electron micrograph in Fig. 7 (x 12,000), the plate-like particles had an aspect ratio (ratio of plate surface diameter: thickness) of 7:1, and there were no pores on the surface or inside the particles.

The BET specific surface area of these plate-like maghemite particles was 2.7 m²/g. The coercive force Hc was 4.78 kA/m (60 Oe), saturation magnetization as was 80.0 emu/g, and squareness ratio ($\sigma_r$:$\sigma_s$) was 0.105:1.

Examples 2 to 4

Plate-like maghemite particles were prepared by the same method as in Example 1 except that various plate-like magnetite particles were used.

Table 1 shows the principal manufacturing conditions used and the properties of the particles obtained.

The X-ray diffraction patterns of the particles obtained in Examples 2 to 4 all showed only peaks correspoding to maghemite. Further, the scanning electron micrographs showed that all the particles consisted of plate-like particles, and that there were no pores on the surface or inside the particles.

EP 0 422 755 B1

Table 1

| Examples | Kind of plate-like magnetite particles (Synthesis Example No.) | Oxidation temperature (°C) | Plate-like maghemite particles | | | | | | |
|---|---|---|---|---|---|---|---|---|---|
| | | | Particle properties | | | | Magnetic properties | | |
| | | | Average particle diameter (µm) | Aspect ratio | Presence or absence of pores | BET specific surface area (m$^2$/g) | Coercive force Hc kA/m (Oe) | Saturation magneti-zation ($\sigma_s$) (emu/g) | Squareness ratio ($\sigma_r$:$\sigma_s$) |
| Example 1 | Synthesis Example 1 | 250 | 1.0 | 7 : 1 | No pore | 2.7 | 4.78 (60) | 80.0 | 0.105:1 |
| Example 2 | Synthesis Example 2 | 250 | 1.5 | 21 : 1 | ditto | 5.3 | 5.97 (75) | 81.9 | 0.121:1 |
| Example 3 | Synthesis Example 3 | 250 | 0.7 | 6 : 1 | ditto | 3.4 | 5.57 (70) | 80.5 | 0.105:1 |
| Example 4 | Synthesis Example 4 | 250 | 2.0 | 25 : 1 | ditto | 4.6 | 5.33 (67) | 79.8 | 0.115:1 |

## Claims

1. Poreless, non-sintered plate-like maghemite particles having:
   (i) an average particle diameter of more than 0.5μm and not more than 2.0μm;
   (ii) a BET specific surface area of not more than $6.0 m^2/g$;
   (iii) a coercive force of not more than 6.37 kA/m (80 Oe);
   (iv) an aspect ratio (ratio of plate surface diameter:thickness) of from 3:1 to 35:1; and
   (v) a squareness ratio (ratio of $\sigma_r:\sigma_s$ of from 0.070:1 to 0.125:1.

2. Particles according to claim 1, which have a coercive force of from 3.98 to 5.97 kA/m (50 to 75 Oe).

3. Particles according to claim 1 or 2, which have an aspect ratio (ratio of plate surface diameter:thickness) of from 5:1 to 30:1.

4. Particles according to any one of the preceding claims, which have a squareness ratio (ratio of $\sigma_r:\sigma_s$) of from 0.075:1 to 0.125:1.

5. A process for producing poreless, non-sintered plate-like maghemite particles as defined in any one of the above claims, comprising
   (i) autoclaving an alkaline suspension containing ferric oxide hydroxide particles and ferrous hydroxide in the presence of sulfate ion at a temperature of from 200 to 300°C to form plate-like magnetite particles, the ferric oxide hydroxide particles being present in an amount of from 0.05 to 1.0 mol/l, the molar ratio of the ferric oxide hydroxide particles to ferrous hydroxide being from 2:1 to 1:1.5, the concentration of sulfate ion in the suspension being from 0.025 to 1.0 mol/l and the concentration of free OH ion in the alkaline suspension being from 0.1 to 10 mol/l, and
   (ii) oxidizing the obtained plate-like magnetite particles under heating in air.

6. A process according to claim 5, wherein the concentration of sulfate ion is from 0.05 to 0.5 mol/l.

7. A process according to claim 5 to 6, wherein the concentration of ferric oxide hydroxide particles is from 0.1 to 0.5 mol/l, and the ratio (molar ratio) of the ferric oxide hydroxide particles to ferrous hydroxide is from 2:1 to 2:1.2.

8. A process according to any one of claims 5 to 7, wherein the concentration of free OH ion in the alkaline suspension is from 1 to 7 mol/l.

9. A process according to any one of claims 5 to 8, wherein the oxidation is carried out at a temperature of 200-400°C.

10. A paint comprising a vehicle and particles as defined in any one of claims 1 to 4.

## Patentansprüche

1. Porenfreie, nicht-gesinterte plättchenartige Maghämitteilchen mit
   (i) einem mittleren Teilchendurchmesser von mehr als 0,5 μm und nicht mehr als 2,0 μm;
   (ii) einer spezifischen Oberfläche nach BET von nicht mehr als 6,0 $m^2/g$;
   (iii) einer Koerzitivfeldstärke von nicht mehr als 6,37 kA/m (80 Oe);
   (iv) einem Formverhältnis (Verhältnis von Plättchenoberflächendurchmesser : Dicke) von 3:1 bis 35:1; und
   (v) einem Rechteckigkeitsverhältnis (Verhältnis von $\sigma_r:\sigma_s$ von 0,070:1 bis 0,125:1).

2. Teilchen nach Anspruch 1 oder 2, welche eine Koerzitivfeldstärke von 3,98 bis 5,97 kA/m (50 bis 75 Oe) haben.

3. Teilchen nach Anspruch 1 oder 2, welche ein Formverhältnis (Verhältnis von Plättchenoberflächendurchmesser : Dicke) 5:1 bis 30:1 aufweisen.

**4.** Teilchen nach einem der vorangehenden Ansprüche, welche ein Rechteckigkeitsverhältnis (Verhältnis von $\sigma_r$:$\sigma_s$) im Bereich von 0,075 : 1 bis 0,125 : 1 haben.

**5.** Verfahren zur Herstellung porenfreier, nicht-gesinterter plättchenartiger Maghämitteilchen, wie sie in einem der vorangehenden Ansprüche definiert sind, umfassend:

(i) Autoklavieren einer alkalischen Suspension, die Eisen(III)-oxid-hydroxid-Teilchen und Eisen(II)-hydroxid enthält, in Anwesenheit von Sulfation bei einer Temperatur von 200 bis 300°C, um plättchenartige Magnetitteilchen zu bilden, wobei die Eisen(III)-oxid-hydroxid-Teilchen in einer Menge im Bereich von 0,05 bis 1,0 Mol/l vorliegen; das molare Verhältnis der Eisen(III)-oxid-hydroxid-Teilchen zu Eisen(II)-hydroxid in einem Bereich von 2:1 bis 1:1,5 liegt; die Sulfationkonzentration in der Suspension 0,025 bis 1,0 Mol/l und die Konzentration an freiem HO-Ion in der alkalischen Suspension 0,1 bis 10 Mol/l ist; und

(ii) Oxidieren der erhaltenen plättchenartigen Magnetitteilchen unter Erhitzen in Luft.

**6.** Verfahren nach Anspruch 5, bei dem die Sulfationkonzentration 0,05 bis 0,5 Mol/l ist.

**7.** Verfahren nach Anspruch 5 oder 6, bei dem die Konzentration an Eisen(III)-oxid-hydroxid-Teilchen 0,1 bis 0,5 Mol/l ist, und das Verhältnis (molares Verhältnis) Eisen(III)-oxid-hydroxid-Teilchen zu Eisen(II)-hydroxid 2:1 bis 2:1,2 ist.

**8.** Verfahren nach einem der Ansprüche 5 bis 7, bei dem die Konzentration an freiem OH-Ion in der alkalischen Suspension im Bereich von 1 bis 7 Mol/l liegt.

**9.** Verfahren nach einem der Ansprüche 5 bis 8, bei dem die Oxidation bei einer Temperatur von 200 bis 400°C durchgeführt wird.

**10.** Anstrichfarbe umfassend ein Vehikel und Teilchen, wie sie in einem der Ansprüche 1 bis 4 definiert sind.

## Revendications

**1.** Particules de maghémite en paillettes non frittées et sans pore, ayant :

(i) un diamètre particulaire moyen supérieur à 0,5 µm et non supérieur à 2,0 µm ;

(ii) une surface spécifique BET non supérieure à 6,0 $m^2/g$ ;

(iii) une force coercitive non supérieure à 6,37 kA/m (80 Oe) ;

(iv) un rapport d'aspect (rapport du diamètre de surface à l'épaisseur des paillettes) de 3:1 à 35:1 et

(v) un taux de rectangularité (rapport $\sigma_r$:$\sigma_s$)de 0,070:1 à 0,125:1.

**2.** Particules selon la revendication 1, ayant une force coercitive de 3,98 à 5,97 kA/m (de 50 à 75 Oe).

**3.** Particules selon la revendication 1 ou 2, ayant un rapport d'aspect (rapport du diamètre de surface à l'épaisseur des paillettes) de 5:1 à 30:1.

**4.** Particules selon l'une quelconque des revendications précédentes, ayant un taux de rectangularité (rapport $\sigma_r$:$\sigma_s$) de 0,075:1 à 0,125:1.

**5.** Procédé de production de particules de maghémite en paillettes non frittées et sans pore, telles que définies selon l'une quelconque des revendications ci-dessus, selon lequel :

(i) on traite dans un autoclave une suspension alcaline contenant des particules d'oxyde hydroxyde ferrique et de l'hydroxyde ferreux, en présence d'ions sulfate à une température de 200 à 300 °C, pour former des particules de magnétite en paillettes, les particules d'oxyde hydroxyde ferrique, étant présentes selon une quantité de 0,05 à 1,0 mole/litre, le rapport molaire des particules d'oxyde hydroxyde ferrique à l'hydroxyde ferreux étant de 2:1 à 1:1,5, la concentration en ions sulfate dans la suspension étant de 0,025 à 1,0 mole/litre et la concentration en ions OH libres dans la suspension alcaline étant de 0,1 à 10 moles/litre, et

(ii) on oxyde les particules de magnétite en paillettes obtenues, par chauffage dans l'air.

**6.** Procédé selon la revendication 5, dans lequel la concentration en ions sulfate, est de 0,05 à 0,5 mole/litre.

**7.** Procédé selon la revendication 5 ou 6, dans lequel la concentration en particules d'oxyde hydroxyde ferrique est de 0,1 à 0,5 mole/litre, et le rapport (rapport molaire) des particules d'oxyde hydroxyde ferrique à l'hydroxyde ferreux étant de 2:1 à 2:1,2.

8. Procédé selon l'une quelconque des revendications 5 à 7, dans lequel la concentration en ions OH libres dans la suspension alcaline, est de 1 à 7 moles/litre.

9. Procédé selon l'une quelconque des revendications 5 à 8, dans lequel l'oxydation est effectuée à une température de 200 à 400 °C.

10. Peinture comprenant un véhicule et des particules telles que définies selon l'une quelconque des revendications 1 à 4.

# Fig. 1

(×10000)

# Fig. 2

2 θ

## Fig. 3

(X10000)

## Fig. 4

(X10000)

# Fig. 5

(X15000)

# Fig. 6

(X30000)

# Fig. 7

(×12000)